# EUROPÄISCHE PATENTSCHRIFT

(11) **EP 1 451 041 B1**
(45) Veröffentlichungstag und Bekanntmachung des Hinweises auf die Patenterteilung: **06.07.2005**
(21) Anmeldenummer: 02792589.0
(22) Anmeldetag: 02.11.2002
(51) Int. Cl.: B60R 19/12

(54) **FRONTSTRUKTUR EINES KRAFTFAHRZEUGES**
FRONT STRUCTURE OF A MOTOR VEHICLE
STRUCTURE AVANT DE VEHICULE AUTOMOBILE

(30) Priorität: 03.11.2001 DE 10154113
(43) Veröffentlichungstag der Anmeldung: 01.09.2004
(73) Patentinhaber: Adam Opel AG, 65423 Rüsselsheim (DE)
(72) Erfinder: BÖTTCHER, Curd-Sigmund, 65343 Eltville (DE)
(86) Internationale Anmeldenummer: PCT/DE2002/004076
(87) Internationale Veröffentlichungsnummer: WO 2003/039915

(56) Entgegenhaltungen:
- EP-A- 1 000 840
- EP-A- 1 138 556
- EP-A- 1 138 557
- EP-A- 1 241 080
- FR-A- 2 445 783
- US-A1- 2001 030 432
- PATENT ABSTRACTS OF JAPAN vol. 008, no. 090 (M-292), 25. April 1984 (1984-04-25) & JP 59 006151 A (NISSAN JIDOSHA KK), 13. Januar 1984 (1984-01-13)
- PATENT ABSTRACTS OF JAPAN vol. 1999, no. 08, 30. Juni 1999 (1999-06-30) & JP 11 078734 A (MITSUBISHI MOTORS CORP), 23. März 1999 (1999-03-23)

## Beschreibung

Die Erfindung bezieht sich auf die Frontstruktur eines Kraftfahrzeuges mit einem unteren Stoßfänger und einem darüber angeordneten oberen Stoßfänger, gemäß dem Oberbegriff des Anspruchs 1.

Eine derartige Frontstruktur ist in der FR 2 445 783 beschrieben. Die beiden Stoßfänger sind über lamellenartige Halter an einer vorderen Karosseriequerwand befestigt.

Zum Stand der Technik gehört auch die EP A 1 138 557. Beide Stoßfänger sind demnach mit einem Schaumstoffpolster versehen.

Eine Frontstruktur ist auch aus der EP 1 000 840 A2 bekannt. Die dort vorgestellte Frontstruktur weist zwei übereinander liegende, Stoßfänger formende Querträger auf, die unabhängig voneinander jeweils an einem Längsträgerpaar befestigt sind. Mit einer solchen Anordnung sollen mehrere Lastpfade zur Aufnahme und Verteilung von Aufprallenergie in die Frontstruktur in Verbindung mit einem großflächigen Aufprallschild geschaffen werden. Außerdem soll ein besserer Fußgängeraufprallschutz erreicht werden können. Dies gelte insbesondere für den unteren Querträger, der auf eine Kollision mit einem Fußgänger abgestimmt werden kann.

Der untere Querträger ist aber nicht entscheidend für die Verletzungsschwere bei einem Fußgänger, der frontal von einem Fahrzeug erfasst wird. Der typische Bewegungsablauf ist vielmehr, dass beide Stoßfänger das Unterbein des Fußgängers treffen, wodurch dieser eine Drehung in Bezug auf das Fahrzeug erfährt und mit dem Oberkörper auf die Motorhaube aufschlägt. Dies wird auch als Abwickeln des Körpers an der Fahrzeugkontur bezeichnet. Das Bein kippt dabei in der Anfangsphase der Bewegung um den oberen Stoßfänger und entfernt sich dabei vom unteren Stoßfänger, so dass es hinsichtlich der Verletzungsschwere entscheidend auf die am oberen Querträger wirkenden Kräfte ankommt.

Auch aus der DE 198 02 841 A1 ist ein System aus zwei übereinander angeordneten Querträgern für Stoßfänger bekannt. Diese sind beweglich in Bezug zur Längsachse der Karosserie angeordnet. In der Grundstellung liegt der obere Querträger vor dem unteren Querträger, so dass der Erstkontakt des Fußgängers mit dem oberen Querträger erfolgt. Um sicherzustellen, dass der Körper des Fußgängers tatsächlich auf die Fronthaube schlägt und nicht nach vorne geschleudert wird, soll - bewirkt durch die Kollision - der untere Querträger ausgefahren werden und den Fußgänger quasi auf die Motorhaube heben.

Für die allermeisten Fußgängerunfälle dürfte aber eine solche Konstruktion nicht notwendig sein, da schon der obere Querträger den Körper des Fußgängers so weit unterhalb des Körperschwerpunktes erfasst, dass auch ohne die in der DE 198 02 841 A1 beschriebene Anordnung der Fußgänger auf die Motorhaube schlägt.

Generell und in den beiden erwähnten Vorschlägen ist es entscheidend, dass die Kräfte, die in den oberen Querträger eingeleitet werden, unterhalb eines bestimmten Grenzwertes liegen, so dass Beinbrüche - zumindest unterhalb einer bestimmten Kollisionsgeschwindigkeit - nicht auftreten. Die Grenzwerte sind gesetzlich bzw. durch Verordnungen festgelegt. Es hat sich gezeigt, dass dies nur dann erreicht werden kann, wenn der obere Querträger gepolstert ist, d. h. mit einer relativ weichen Schaumstofflage versehen wird, die in etwa 8 cm dick ist.

Wegen seiner Weichheit kann die Schaumstofflage keinen effektiven Widerstand bieten, wenn das Fahrzeug gegen ein anderes Fahrzeug oder gegen ein festes Hindernis fährt. Die dabei auftretenden Kollisionsenergien müssen daher von hinter den Stoßfängern liegenden Karosserieteilen aufgenommen werden. Die Schaumstofflage bewirkt somit eine nicht immer gewünschte Verlängerung des Fahrzeuges entsprechend ihrer Dicke.

Es könnte daran gedacht werden, die Längsträger des Fahrzeuges, die die Energie bei einem hochenergetischen Aufprall, also bei einem Aufprall mit einem anderen Fahrzeug oder einem festen Hindernis, aufnehmen, entsprechend zu verkürzen. Dies kann aber auf keinen Fall hingenommen werden, da z.B. dann die geltenden Vorschriften hinsichtlich eines 50 bzw. 60 km/h-Aufpralls gegen ein festes Hindernis oder die Danner-Anforderungen (siehe weiter unten) nicht eingehalten werden können.

Die Erfindung beruht somit auf dem Problem, eine Frontstruktur zu schaffen, die sowohl fußgängerkompatibel ist, d. h. die so gestaltet ist, dass bei einer Kollision mit einem Fußgänger nur Kräfte in die Beine des Fußgängers eingeleitet werden, die unterhalb eines bestimmten Grenzwertes liegen, als auch in der Lage ist, Energie bei einem hochenergetischen Aufprall, also bei einem Aufprall mit einem anderen Fahrzeug oder einem festen Hindernis, aufzunehmen. Dies soll aber unter der Bedingung erreicht werden, dass eine Verlängerung des Fahrzeuges möglichst vermieden wird. Außerdem soll bei leichten derartigen Kollisionen die Frontstruktur in einfacher Weise repariert werden können.

Zur Lösung des Problems sieht die Erfindung eine Frontstruktur eines Kraftfahrzeuges gemäß dem Oberbegriff des Anspruchs 1 mit den weiteren Merkmalen vor, dass die Stoßfänger mit ihren seitlichen Enden an Längsträgern des Kraftfahrzeuges befestigt sind, dass zwischen den Enden der Längsträger und der Rückseite eines den oberen Stoßfänger formenden Querträgers obere Crashboxen und zwischen den Enden der Längsträger und der Rückseite eines den unteren Stoßfänger formenden Querträgers untere Crashboxen angeordnet sind, deren Längssteifigkeit kleiner ist als die der Längsträger, wobei die unteren Crashboxen weiter nach vorne reichen als die oberen Crashboxen.

Der untere Querträger ist demnach nicht mit einer Schaumstofflage versehen, so dass er bei einer hochenergetischen Kollision sofort hohe Widerstandskräfte zur Verfügung stellen kann, die zu einer definierten Verzögerung des Gesamtfahrzeuges führen.

Bei einer Fußgängerkollision ergibt sich durch den Kontakt mit der nicht gepolsterten Frontfläche des unteren Stoßfängers ein ungedämpfter Stoß auf das Bein des Fußgängers. Dieser wirkt aber relativ kurz, da sich sofort eine Kippung um den oberen, mit einer Schaumstofflage versehenen Querträger einstellt, so dass wegen der Kürze des Kontaktes am unteren Stoßfänger nicht mit schwereren Verletzungen zu rechnen ist. Die Hauptabstützung des Beines erfolgt vielmehr an der hinterpolsterten Frontfläche des oberen Querträgers. Hier werden die Kräfte wegen der Schaumstofflage begrenzt.

Der Clou der Erfindung besteht somit darin, dass an der Front zwei lastaufnehmende Ebenen vorhanden sind, nämlich eine untere steife Ebene und eine obere, in der Anfangsphase weiche Ebene.

Vorzugsweise weisen die Stoßfänger Querträger auf, die von einem zum anderen Längsträger reichen und die, damit sie eine genügende Versteifung des durch die Längsträger und Querträger gebildeten Fahrzeugrahmens bewirken, ein U-förmiges, nach hinten offenes Profil aufweisen.

Um die zusätzliche Länge, die sich durch die Schaumstofflage ergibt, möglichst gering zu halten, wird die Schaumstofflage in Vertiefungen im oberen Querträger eingesetzt, deren Tiefe der Blocklänge des Schaumstoffes entspricht. D.h. die Schaumstofflage schaut nur so weit nach vorne über den Querträger hinaus, wie sie tatsächlich verformt werden kann. Dies reduziert die effektive Verlängerung des Fahrzeuges auf 6 cm, wenn z. B. eine Schaumstofflage von 8 cm eingesetzt wird.

Eine besonders gute Versteifung erhält man, wenn die beiden Querträger einteilig ausgeführt sind, d.h. Abschnitte eines Bauteils bilden, das zwischen den die Querträger bildenden Abschnitten einen nach hinten eingezogenen Einzug aufweist.

Es kann daran gedacht werden, die beiden Querträger bzw. die Baueinheit unmittelbar mit den Längsträgern des Fahrzeuges zu verbinden. Diese Anordnung hat aber den Nachteil, dass selbst kleine Deformationskräfte weit in die Längsträger hineingeleitet werden, so dass Beschädigungen des Fahrzeuges innerhalb des Motorraumes auftreten.

Es existieren daher schon lange Anforderungen, die in der Fachwelt als Danner-Anforderungen bekannt sind - benannt nach Herrn Professor Danner, der diese entwickelt hat -, die verlangen, dass ein Fahrzeug, das durch eine Kollision mit einem festen Hindernis bei geringen Geschwindigkeiten beschädigt ist, ohne großen Aufwand repariert werden kann. Dies bedeutet, dass die Schäden einer solchen Kollision auf einen kleinen Karosseriebereich begrenzt werden müssen und dieser so aufzubauen ist, dass die beschädigten Teile leicht auszutauschen sind. Die Einhaltung der Danner-Anforderungen ist bedeutsam für die Einstufung der Fahrzeuge in Versicherungsklassen.

Im Bereich der Frontstruktur sind daher sogenannte Crashboxen vorhanden. Hierbei handelt es sich im Prinzip um Verlängerungen der Längsträger, die aber deutlich weicher als diese gestaltet sind, wobei eine steife Trennplatte zwischen der Crashbox und dem eigentlichen Längsträger Übertragungen von Deformationen verhindert. Bei kleinen Kollisionsgeschwindigkeiten nehmen diese Crashboxen ausschließlich die Verformungen auf. Die Reparatur ist leicht zu bewerkstelligen, da die beschädigten Crashboxen lediglich von der Stützplatte getrennt und durch neue ersetzt werden müssen.

Durch die Anordnung von der oberen Crashbox hinter dem oberen Querträger und von der unteren Crashbox unter dem unteren Querträger wird diese Anforderung erfüllt. Da die untere Crashbox weiter nach vorne reicht, nimmt sie bei Kollisionen mit einem festen Hindernis zunächst alleine Energie auf, bis die Schaumstofflage zusammengedrückt ist und auch die obere Crashbox an der Kollision beteiligt wird.

Durch die vorgezogene untere Crashbox wird unmittelbar nach dem Erstkontakt mit einem schweren Hindernis Verformungsenergie aufgenommen und somit erreicht, dass bei Kollisionen mit geringeren Geschwindigkeiten die Danner-Anforderungen erfüllt sind. Da die Schaumstofflage bezogen auf die Längsrichtung des Fahrzeuges auf gleicher Höhe mit den unteren Crashboxen angeordnet ist, kommt es zu keiner übermäßigen Verlängerung des Kraftfahrzeuges.

Ein weiterer Aspekt, der zu berücksichtigen ist, besteht darin, dass bei Kollisionen mit geringer Geschwindigkeit Aggregate im Motorraum möglichst nicht betroffen werden sollen, da ihr Austausch mit hohen Kosten verbunden ist. Kritisch ist hier insbesondere der relativ weit vorne im Motorraum des Kraftfahrzeuges angeordnete Motorkühler.

Die Erfindung sieht daher ein Verlagerungssystem vor, bei dem der Motorkühler im Falle einer Kollision aus der Kollisionszone herausbewegt wird. Dazu befindet sich hinter den Stoßfängern und zwischen den Crashboxen ein leicht in Fahrzeuglängsrichtung stauchbarer Träger, auf dem der Motorkühler befestigt ist, wobei der Träger mit seinem hinteren Ende an einem die Längsträger miteinander verbindenden Querträger und mit seinem vorderen Ende mit einem der Stoßfänger, vorzugsweise dem unteren Stoßfänger, verbunden ist.

Wenn während einer Kollision zunächst die untere Crashbox gestaucht wird, wird der Träger des Motorkühlers ebenfalls gestaucht, was zur Folge hat, dass der auf ihm befestigte Motorkühler nach hinten aus der Crashzone herausbewegt wird, so dass für viele Fälle eine Beschädigung des Motorkühlers nicht zu erwarten ist.

Bei dem Träger kann es sich im Prinzip um zwei Streben handeln. Denkbar ist aber auch ein Platte, die gleichzeitig den Vorteil hat, dass der Unterboden geschlossen ist.

Zur weiteren Versteifung der Karosserie sieht die Erfindung einen Motorraumquerträger vor, der oberhalb des Motorkühlers verläuft und die beiden Stützplatten miteinander verbindet. Der Motorraumquerträger bildet damit eine Art Abdeckung für den Kühler und mit einer vorderen Anschrägung eine Ablagefläche für den sich abwickelnden Fußgängerkörper. Da sich der Motorkühler unterhalb des Querträgers befindet, ist nicht zu befürchten, dass von ihm abstehende Teile in den Abwickelweg hineingelangen und zusätzliche Verletzungen beim Fußgänger hervorrufen.

Im Folgenden soll anhand eines Ausführungsbeispiels die Erfindung näher erläutert werden. Dazu zeigen:
- Fig. 1: eine perspektivische Darstellung der Frontstruktur eines Kraftfahrzeuges mit Stoßfängern in der Sicht von vorne,
- Fig. 2: zeigt dieselbe Frontstruktur in einer Rückansicht,
- Fig. 3 und Fig. 4: zeigen je einen Querschnitt durch die Anordnung der Stoßfänger in der Fahrzeugstruktur.

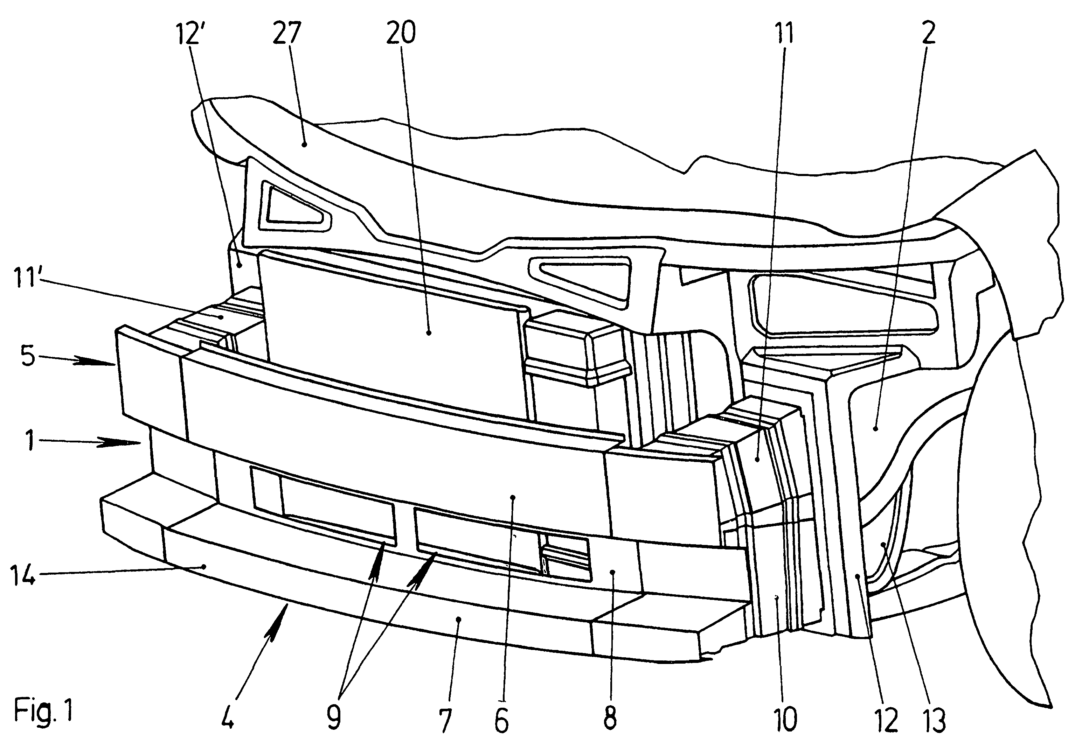

Zunächst wird auf die Figur 1 Bezug genommen. Diese zeigt die Frontstruktur 1 eines Kraftfahrzeuges im vorderen Bereich. Zu beiden Fahrzeugseiten erstrecken sich Längsträger 2, 3, von denen in Figur 1 nur der linke Längsträger 2 zu erkennen ist. Diese Längsträger 2, 3 bilden das Grundgerüst für die Karosserie des Kraftfahrzeuges und sind in ihren verschiedenen Ausführungsmöglichkeiten dem Fachmann wohl bekannt.

Vor den Enden der Längsträger 2, 3 erstreckt sich quer zur Fahrzeuglängsrichtung eine Stoßfängeranordnung, bestehend aus einem unteren Stoßfänger 4 und einem oberen Stoßfänger 5. Beide Stoßfänger 4, 5 weisen einen Querträger 6, 7 auf, der ein nach hinten offenes, U-förmiges Querschnittsprofil aufweist.

Die beiden Querträgern 6, 7 sind in einem einzigen Bauteil ausgeführt, das über einen Einzug 8 verfügt. Dort befinden sich Lufteinlassöffnungen 9.

Die aus den beiden Querträger 6, 7 bestehende Baueinheit ist über Crashboxen 10, 10', 11, 11' mit dem jeweiligen Längsträger 2, 3 verbunden. Bei den Crashboxen 10, 10', 11, 11' handelt es sich um im Schnitt quadratische bzw. rechteckförmige Blechrohre, deren Seitenflächen mit Sicken versehen sind, um ein Stauchen in Längsrichtung zu erleichtern. Die Verbindung mit dem jeweiligen Längsträger 2, 3 erfolgt über eine Stützplatte 12, 12', die an dem vorderen Ende des jeweiligen Längsträgers 2, 3 in vertikaler Ausrichtung befestigt ist. Um eine sichere Abstützung der Stützplatte 12, 12' über ihre gesamte Höhe zu erfahren, befindet sich unterhalb des Längsträgers 2 bzw. 3 ein Schuh 13. An der Frontseite der Stützplatte 12, 12' sind die Crashboxen 10, 11, 10',11' verschweißt bzw. verschraubt.

Die vorderen Enden der oberen Crashboxen 11, 11' tauchen in das U-förmige Profil des oberen Querträgers 6 ein. Die vorderen Enden der unteren Crashboxen 10, 10' sind stufig ausgeführt, so dass ein kleinerer Teil in das U-förmige Profil des unteren Querträgers 7 eintaucht, während ein zurückgesetzter Abschnitt an dem Einzug 8 anliegt. Die Baueinheit aus den beiden Stoßfängern 4, 5 und dem Einzug 8 ist somit auf ihrer gesamten Höhe zu beiden Seiten vollflächig abgestützt.

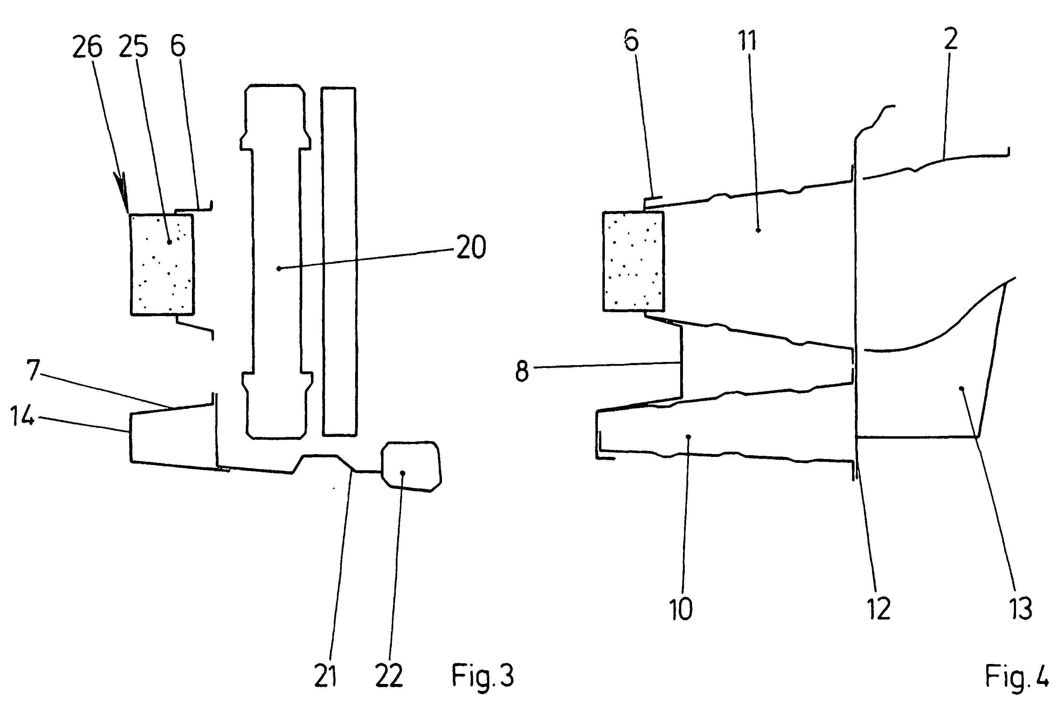

Der obere Querträger 6 ist mit einer Lage aus Schaumstoff versehen, die eine solche Dicke aufweist, dass sich ihre Frontfläche auf gleicher Höhe befindet wie die Frontfläche 14 des unteren Querträgers 7. Der Übersichtlichkeit wegen ist die Schaumstofflage nicht in der Fig. 1, wohl aber in den Fig. 3 und 4 dargestellt.

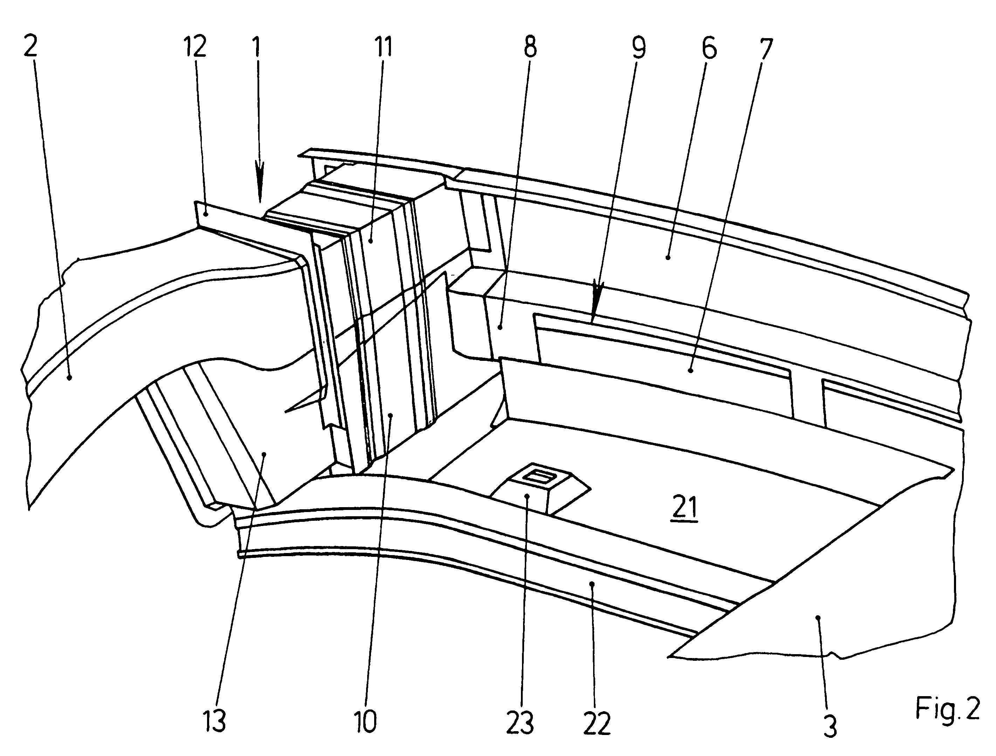

Wie in Fig. 1 zu erkennen ist, befindet sich hinter den beiden Querträgern 6, 7 ein Motorkühler 20. Dessen Befestigung ist in Figur 2 näher dargestellt. Diese Figur zeigt die Konstruktion gemäß Figur 1 aus einer rückwärtigen Perspektive. Insofern sind dieselben Teile mit denselben Bezugszeichen versehen. Man erkennt noch einmal besonders deutlich, dass die jeweils oberen Crashboxen 11, 11' in das U-förmige Profil des oberen Querträgers 6 eintauchen, während die unteren Crashboxen 10, 10' sowohl den unteren Querträger 7 als auch den Einzug 8 abstützen.

Zur Befestigung des eben erwähnten Motorkühlers 20 befindet sich im Bereich zwischen den Crashboxen 10, 10', 11, 11' eine Trageplatte 21, deren vorderes Ende mit der Rückseite des unteren Querträgers 7 verbunden ist, der dadurch ein geschlossenes Profil mit erhöhter Steifigkeit erhält. Das hintere Ende ist mit einem Motorquerträger 22 verschweißt, der unter den schon erwähnten Schuhen 13 an den Längsträgern befestigt ist. Dieser Motorquerträger 22 dient vor allem der Lagerung des Fahrzeugmotors.

Auf der Trageplatte 21 sind zwei Befestigungspunkte 23, von denen einer zu erkennen ist, vorgesehen. Auf ihnen wird der Motorkühler 20 befestigt. Die Trageplatte 21 ist so ausgerichtet, dass sie beim Stauchen der Crashboxen 10, 10', 11, 11' ebenfalls gestaucht bzw. nach hinten geschoben wird. Dabei nimmt sie den Motorkühler 20 nach hinten mit, wodurch dieser im Abstand zu den vorderen Stoßfängern 4, 5 verbleibt und damit bei kleinen Deformationstiefen nicht beschädigt wird.

Die Figur 3 zeigt einen Querschnitt durch die Anordnung im Bereich des Motorkühlers 20, Figur 4 einen Querschnitt durch die Anordnung im Bereich der Crashboxen 10, 10', 11, 11'. Auch hier sind identische Teile mit denselben Bezugszeichen versehen. Zusätzlich ist hier schematisch die Schaumstofflage 25 dargestellt. Diese befindet sich am oberen Querträger 6, der dazu eine Vertiefung aufweist, in der die Schaumstofflage 25 über eine Teillänge einliegt, die ihrer Blocklänge entspricht. Nach vorne ragt die Schaumstofflage 25 nur so weit hervor, wie dies ihrer maximal möglichen Verformung entspricht.

In den beiden Figuren 3, 4 erkennt man gut, dass die jeweilige Frontfläche 26 der Schaumstofflage 25 des oberen Querträgers 6 und die Frontfläche 14 des unteren Querträgers 7 sich auf gleicher Höhe befinden bzw. dass die Frontfläche 14 des unteren Querträgers 7 noch vor der Frontfläche 26 der Schaumstofflage 25 liegt.

Wie aus Figur 4 zu erkennen ist, ergibt sich damit die Möglichkeit, dass die untere Crashbox 10, 10' deutlich länger ist als die obere Crashbox 11, 11'. Bei einer Frontalkollision mit einem festen Hindernis ist damit die untere Crashbox 10, 10' sofort involviert und kann auf einem hohen Kraftniveau Energie aufnehmen. Sobald die Verformung einen Weg von ca. 6 cm überwunden hat, wird auch die obere Crashbox 11, 11' in die Verformung mit einbezogen. Auf diese Weise kann auf kurzen Wegen die Aufprallenergie mit einem anderen Fahrzeug oder einem festen Hindernis abgebaut werden, ohne dass die hinter den Crashboxen 10, 10', 11, 11' liegenden Längsträger 2, 3 in die Verformung mit einbezogen werden.

Die Schaumstofflage 25 liegt somit oberhalb der unteren Crashbox 10, 10', die möglicherweise eine etwas größere Länge aufweist, um zu gewährleisten, dass in der Anfangsphase der Kollision nur sie wirksam ist. Durch die dargestellte kombinierte Anordnung von Crashboxen und Schaumstofflage ergibt sich keine deutliche Verlängerung des Fahrzeuges.

Durch die Anordnung eines unteren und eines oberen Stoßfängers wird auch eine Verbesserung des Side-Crash-Verhaltens, insbesondere beim Auftreffen eines erfindungsgemäßen Fahrzeuges auf ein Fremdfahrzeug, erreicht, da der erfindungsgemäße untere Stoßfänger auf eine feste Fahrzeugstruktur, insbesondere Schweller, trifft. Hierdurch wird die Aufprallenergie auf diesen abgeleitet, so dass beim nachfolgenden Auftreffen des oberen Stoßfängers auf die Seitentür die B-Säule des Fremdfahrzeuges geringer belastet wird.

Bei einer Kollision mit einem Fußgänger wird der untere Bereich des Beines zwar sofort von dem nicht gepolsterten unteren Stoßfänger 4 getroffen, was durchaus zunächst hohe Kräfte erzeugen kann. Da aber wegen des erhöhten Schwerpunktes des Körpers sofort eine Kippung um die Schaumstofflage 25 ausgelöst wird, löst sich das Bein schon nach kurzer Zeit von dem unteren Stoßfänger 4, so dass die Kraftwirkung gering ist. Die weitere Abstützung erfolgt an der Schaumstofflage 25, die sich definiert zusammendrückt und wegen ihrer Weichheit nur ein Kraftniveau zulässt, bei dem keine schweren Verletzungen der unteren Extremitäten des erfassten Fußgängers zu erwarten sind.

### Bezugszeichenliste

- 1: Frontstruktur
- 2: linker Längsträger
- 3: rechter Längsträger
- 4: unterer Stoßfänger
- 5: oberer Stoßfänger

- 6: Querträger
- 7: Querträger
- 8: Einzug
- 9: Lufteinlassöffnung
- 10: Crashbox
- 10': Crashbox

- 11: Crashbox
- 11': Crashbox
- 12: Stützplatte
- 12': Stützplatte
- 13: Schuh
- 14: Frontfläche

- 20: Motorkühler
- 21: Trageplatte
- 22: Motorquerträger
- 23: Befestigungspunkt
- 25: Schaumstofflage

- 26: Frontfläche
- 27: Motorraumquerträger

## Patentansprüche

1. Frontstruktur eines Kraftfahrzeuges mit einem unteren Stoßfänger (4) und einem darüber angeordneten oberen Stoßfänger (5), wobei der obere Stoßfänger (5) an seiner vorderen Seite eine Schaumstofflage (25) mit einer Frontfläche (26) zur Begrenzung des in einer Kollision mit einem Fußgänger auf dessen Beine wirkenden Kräfte aufweist und wobei der untere Stoßfänger (4) ebenfalls eine Frontfläche (14) aufweist, die in Längsrichtung des Kraftfahrzeuges betrachtet in etwa auf gleicher Höhe mit der oder vor der Frontfläche (26) des oberen Stoßfängers (5) liegt, **dadurch gekennzeichnet, dass** die Stoßfänger (4,5) mit ihren seitlichen Enden an Längsträgern (2, 3) des Kraftfahrzeuges befestigt sind, dass zwischen den Enden der Längsträger (2, 3) und der Rückseite eines den oberen Stoßfänger formenden Querträgers (6) obere Crashboxen (11, 11') und zwischen den Enden der Längsträger (2, 3) und der Rückseite eines den unteren Stoßfänger formenden Querträgers (7) untere Crashboxen (10, 10') angeordnet sind, deren Längssteifigkeit kleiner ist als die der Längsträger (2, 3), wobei die unteren Crashboxen (10, 10') weiter nach vorne reichen als die oberen Crashboxen (11, 11').

2. Frontstruktur nach Anspruch 1, **dadurch gekennzeichnet, dass** die Schaumstofflage (25) an der Vorderseite eines sich von einem zum anderen Längsträger (2, 3) reichenden oberen Querträgers (6) angebracht ist.

3. Frontstruktur nach Anspruch 2, **dadurch gekennzeichnet, dass** der Querträger (6) ein U-förmiges, nach hinten offenes Profil aufweist.

4. Frontstruktur nach einem der Ansprüche 1 bis 3, **dadurch gekennzeichnet, dass** die Schaumstofflage (25) mit ihrer Blocklänge in einer Vertiefung im Querträger (6) liegt.

5. Frontstruktur nach Anspruch 1, **dadurch gekennzeichnet, dass** die Frontfläche (14) des unteren Stoßfängers (4) von einem ebenfalls von einem zum anderen Längsträger (2, 3) reichenden unteren Querträger (7) gebildet ist.

6. Frontstruktur nach einem der Ansprüche 1 bis 5, **dadurch gekennzeichnet, dass** die Querträger (6, 7) ein Bauteil bilden, das zwischen seinen die Querträger (6, 7) bildenden Abschnitten einen nach hinten eingezogenen Einzug (8) aufweist.

7. Frontstruktur nach Anspruch **1, dadurch gekennzeichnet, dass** an den vorderen Enden der Längsträger (2, 3) jeweils eine in etwa senkrecht verlaufende Stützplatte (12, 12') angebracht ist, an deren vorderen Seite sowohl eine Crashbox (11, 11') für den oberen Querträger (6) als auch eine Crashbox (10, 10') für den unteren Querträger (7) angebracht ist.

8. Frontstruktur nach Anspruch 7, **dadurch gekennzeichnet, dass** die untere Crashbox (10, 10') länger ist als die obere Crashbox (11, 11').

9. Frontstruktur nach Anspruch 7 oder 8, **dadurch gekennzeichnet, dass** die untere Crashbox (10, 10') eine Höhe aufweist, so dass sie sowohl den unteren Querträger (7) als auch den Einzug (8) abstützt.

10. Frontstruktur nach einem der vorhergehenden Ansprüche, **dadurch gekennzeichnet, dass** hinter den Stoßfängern (4, 5) und zwischen den Crashboxen (10, 10', 11, 11') ein leicht stauchbarer Träger verläuft, auf dem der Motorkühler (20) befestigt ist, wobei der Träger mit seinem hinteren Ende an einem die Längsträger (2, 3) miteinander verbindenden Motorquerträger (22) und mit seinem vorderen Ende an einem der Stoßfänger (4, 5) befestigt ist.

11. Frontstruktur nach Anspruch 10, **dadurch gekennzeichnet, dass** der Träger als Trageplatte (21) ausgebildet ist, die an dem unteren Querträger (7) befestigt ist.

12. Frontstruktur nach Anspruch 7 oder 10, **dadurch gekennzeichnet, dass** die Stützplatten (12, 12') mit einem über den Motorkühler (20) verlaufenden Motorraumquerträger (27) verbunden sind, der eine vordere Anschrägung aufweist.

## Claims

1. A frontal structure of a motor vehicle comprising a lower bumper (4) and an upper bumper (5) arranged thereabove, wherein the front face of the upper bumper (5) comprises a layer of foamed material (25) having a front surface (26) for limiting the forces acting on the pedestrian's legs in the event of a collision with a pedestrian and wherein the lower bumper (4) likewise comprises a front face (14) which, as viewed in the longitudinal direction of the motor vehicle, is located in approximately the same vertical plane as or in front of the front surface (26) of the upper bumper (5), **characterized in that** the lateral ends of the bumpers (4, 5) are fixed to longitudinal members (2, 3) of the motor vehicle, **in that** upper crash boxes (11, 11') are arranged between the ends of the longitudinal members (2, 3) and the rear face of a cross beam (6) forming the upper bumper and lower crash boxes (10, 10') are arranged between the ends of the longitudinal members (2, 3) and the rear face of the cross beam (7) forming the lower bumper, wherein the longitudinal rigidity of said crash boxes is smaller than that of the longitudinal members (2, 3), and wherein the lower crash boxes (10, 10') extend forwardly to a greater extent than the upper crash boxes (11, 11').

2. A frontal structure in accordance with Claim 1, **characterized in that** the layer of foamed material (25) is applied to the front face of an upper cross beam (6) which extends from one of the longitudinal members (2, 3) to the other.

3. A frontal structure in accordance with Claim 2, **characterized in that** the cross beam (6) comprises a rearwardly open U-shaped profile.

4. A frontal structure in accordance with any of Claims 1 to 3, **characterized in that** the block length of the layer of foamed material (25) lies in a depression in the cross beam (6) .

5. A frontal structure in accordance with Claim 1, **characterized in that** the front face (14) of the lower bumper (4) is formed by a lower cross beam (7) which likewise extends from one of the longitudinal members (2, 3) to the other.

6. A frontal structure in accordance with any of the Claims 1 to 5, **characterized in that** the cross beams (6, 7) form a component which comprises a rearwardly set back recess (8) between the sections thereof forming the cross beams (6, 7).

7. A frontal structure in accordance with Claim 1, **characterized in that** a respective approximately vertically extending support plate (12, 12') is attached to the front ends of the longitudinal members (2, 3), and a crash box (11, 11') for the upper cross beam (6) and a crash box (10, 10') for the lower cross beam (7) is attached to the front face of said support plate.

8. A frontal structure in accordance with Claim 7, **characterized in that** the lower crash box (10, 10') is longer than the upper crash box (11, 11').

9. A frontal structure in accordance with Claim 7 or 8, **characterized in that** the height of the lower crash box (10, 10') is such that it supports both the lower cross beam (7) and the recess (8).

10. A frontal structure in accordance with any of the preceding Claims, **characterized in that** an easily compressible supporting member, to which the radiator (20) is fixed, runs behind the bumpers (4, 5) and between the crash boxes (10, 10',11, 11'), wherein the rear end of the supporting member is fixed to an engine cross beam (22) which connects the longitudinal members (2, 3) together and the front end thereof is fixed to one of the bumpers (4, 5).

11. A frontal structure in accordance with Claim 10, **characterized in that** the supporting member is in the form of a mounting plate (21) which is fixed to the lower cross beam (7).

12. A frontal structure in accordance with Claim 7 or 10, **characterized in that** the support plates (12, 12') are connected to an engine compartment cross beam (27) which runs above the radiator (20) and comprises a front chamfering.

## Revendications

1. Structure avant d'un véhicule automobile avec un pare-chocs inférieur (4), et un pare-chocs supérieur (5) disposé au-dessus de ce dernier, le pare-chocs supérieur (5) présentant sur sa face avant une couche en mousse (matière alvéolaire) dotée d'une surface frontale (26) destinée, en cas de collision avec un piéton, à limiter les forces agissant sur les jambes de ce dernier, et le pare-chocs inférieur (4) présentant également une surface frontale (14) qui, observée dans le sens longitudinal du véhicule automobile, se situe environ à la même hauteur que la surface frontale (26) du pare-chocs supérieur (5) ou devant celle-ci, **caractérisée en ce que** les pare-chocs (4, 5) sont fixés par leurs extrémités latérales sur les longerons (2, 3) du véhicule automobile, **en ce que** sont disposées entre les extrémités des longerons (2, 3) et la face arrière d'une traverse (6) formant le pare-chocs supérieur des "crash-box" ou boîtiers d'écrasement supérieures (11, 11') et entre les extrémités des longerons (2, 3) et la face arrière d'une traverse formant le pare-chocs inférieur des crash-box inférieures (10, 10') dont la rigidité longitudinale est inférieure à celle des longerons (2, 3), les crash-box inférieures (10, 10') étant plus avancées que les crash-box supérieures (11, 11')

2. Structure avant selon la revendication 1, **caractérisée en ce que** la couche de mousse (25) est appliquée sur la face avant d'une traverse supérieure (6) s'étendant de l'un à l'autre des longerons (2, 3).

3. Structure avant selon la revendication 2, **caractérisée en ce que** la traverse (6) présente un profil en forme de U ouvert vers l'arrière.

4. Structure avant selon l'une des revendications 1 à 3, **caractérisée en ce que** la longueur du bloc de la couche de mousse (25) se trouve dans un renfoncement de la traverse (6).

5. Structure avant selon la revendication 1, **caractérisée en ce que** la surface frontale (14) du pare-chocs inférieur (4) est constituée d'une traverse inférieure (7) s'étendant également de l'un à l'autre des longerons (2, 3).

6. Structure avant selon l'une des revendications 1 à 5, **caractérisée en ce que** les traverses (6, 7) forment un composant qui présente un renfoncement (8) dégagé en arrière, entre ses parties formant les traverses (6, 7).

7. Structure avant selon la revendication 1, **caractérisée en ce que**, sur chacune des deux extrémités avant des longerons (2, 3), est disposée une plaque d'appui (12, 12') s'étendant, de manière à peu près perpendiculaire sur la face avant de laquelle est disposée aussi bien une crash-box (11, 11') pour la traverse supérieure (6) qu'une crash-box (10, 10') pour la traverse inférieure.

8. Structure avant selon la revendication 7, **caractérisée en ce que** la crash-box inférieure (10, 10') est plus longue que la crash-box supérieure (11, 11')

9. Structure avant selon la revendication 7 ou 8, **caractérisée en ce que** la crash-box inférieure (10, 10') présente une hauteur telle qu'elle soutient aussi bien la traverse inférieure (7) que le renfoncement (8).

10. Structure avant selon l'une quelconque des revendications précédentes, **caractérisée en ce qu'**un support légèrement compressible, sur lequel est fixé le radiateur (20) de moteur, s'étend derrière les pare-chocs (4, 5) et entre les crash-box (10, 10', 11, 11'), lequel support est fixé par son extrémité arrière à un support transversal (22) de moteur reliant les traverses (2, 3) entre elles et, par son extrémité avant, à l'un des pare-chocs (4, 5).

11. Structure avant selon la revendication 10, **caractérisée en ce que** le support est configuré sous forme de plaque de support (21) fixée à la traverse inférieure (7).

12. Structure avant selon la revendication 7 ou 10, **caractérisée en ce que** les plaques d'appui (12, 12') sont reliées à une traverse (27) du compartiment moteur, s'étendant au-dessus du radiateur de moteur (20) et qui présente un chanfrein avant.
